# FASCICULE DE BREVET EUROPEEN

(11) **EP 2 314 371 B1**
(45) Date de publication et mention de la délivrance du brevet: **30.05.2012**
(21) Numéro de dépôt: 10290499.2
(22) Date de dépôt: 21.09.2010
(51) Int. Cl.: B01J 8/00, B01J 8/06

(54) **Dispositif de chargement de tubes avec des particules de catalyseur**
Vorrichtung zur Befüllung von Rohren mit Katalysatorteilchen.
Apparatus for charging tubes with catalyst particles

(30) Priorité: 01.10.2009 FR 0904683
(43) Date de publication de la demande: 27.04.2011
(73) Titulaire: IFP Energies nouvelles, 92852 Rueil-Malmaison Cedex (FR)
(72) Inventeur: Sanz, Elena, 69005 Lyon (FR); Beaumont, Robert, 69140 Rillieux la Pape (FR); Colin, Jérôme, 78000 Versailles (FR); Giroudiere, Fabrice, 69530 Orlienas (FR)

(56) Documents cités:
- WO-A1-98/02238
- FR-A1- 2 918 904
- US-A1- 2009 145 727

## Description

### DOMAINE DE L'INVENTION

La présente invention se situe dans le domaine des dispositifs permettant le chargement de catalyseur présent sous forme de particules solides dans des réacteurs multitubulaire.

La particularité du milieu de chargement concernant la présente invention est qu'il est constitué par la zone annulaire comprise entre un tube extérieur et un tube intérieur.

On appelle usuellement ce type de tube, tube "baïonnette". Le catalyseur lui même est constitué de particules de forme généralement cylindrique, de diamètre environ 1 à 2 cm, et de longueur comprise entre 0,5 cm à 2 cm.

La présente invention n'est pas liée à une réaction chimique particulière, mais concerne plus généralement tout réacteur faisant appel à la technologie des tubes dit tube baïonnette.

A titre d'exemple, les réacteurs concernés par la présente invention sont des réacteurs de vaporeformage de gaz naturel pour la production de gaz de synthèse de grande capacité (typiquement 100 000 Nm³/h). Ces réacteurs sont typiquement constitués d'un ensemble d'environ 200 à 300 tubes de 15 mètres de hauteur enfermés dans une virole pouvant atteindre 15 mètres de diamètre.

Un problème important rencontré dans le chargement de ces réacteurs multitubulaires est celui de l'homogénéité de la densité de chargement entre les différents tubes catalytiques.

En effet, toute hétérogénéité dans le chargement va se traduire par une différence de densité de chargement pouvant conduire à des passages préférentiels d'un tube à un autre, voir au sein d'un même tube. Il est essentiel que la méthode de chargement retenue assure une bonne homogénéité de densité entre les différents tubes catalytiques.

La méthode de chargement associée au dispositif doit également être reproductible et suffisamment rapide pour que le temps de chargement reste dans des limites raisonnables.

### EXAMEN DE L'ART ANTERIEUR

L'art antérieur dans le domaine du chargement des réacteurs catalytiques est représenté par deux grands types de chargement appelés chargement "en pluie" et chargement "à la manche". Le premier de ces chargements consiste à distribuer les particules de catalyseur à l'intérieur du réacteur au moyen d'une mise en rotation des dites particules et à les laisser tomber à l'image de gouttes de pluie.

Cette méthode conduit à un chargement dense et homogène, mais nécessite un équipement de mise en rotation permettant de distribuer le catalyseur selon plusieurs rayons de manière à couvrir correctement l'ensemble de la section catalytique.

L'autre méthode dite "à la manche" consiste à introduire les particules de catalyseur dans le réacteur au travers d'une manche souple qui est progressivement relevée vers le haut au fur et à mesure que le niveau des particules de catalyseur déversées s'élève dans le réacteur. Cette méthode conduit à un chargement moins dense que celui dit "en pluie", mais fait appel à un équipement plus simple.

Les références ci dessous décrivent de manière plus précise certaines autres méthodes de chargement utilisées pour des réacteurs industriels:
o UNIDENSE Catalyst Loading for Steam Reformers (qu'on peut traduire par méthode de chargement UNIDENSE pour réacteur de vaporeformage) paru en 2008 dans la brochure commerciale de Johnson Matthey.
o Damand, M. B., Erikstrup, N. H. B., Marcher, J., Nielsen, H. C. L. T., and Kelling, D. Chargement de réacteurs de vaporeformage par la méthode dite "Spiraload Method". dans Ammonia Technical Manual, 2003, article d'Haldor Topsoe.
o "Spiraload Technology", 2008, dans la brochure commerciale d'Haldor Topsoe.

Les méthodes de l'art antérieur ne permettent pas de traiter de manière satisfaisante le problème du chargement du catalyseur à l'intérieur de tubes présentant une zone annulaire délimitée entre un tube externe et un tube interne, type de tubes appelé par l'homme du métier tube baïonnette.

En effet, l'espace disponible dans la zone annulaire d'un tube baïonnette est typiquement de l'ordre de 50 mm, c'est-à-dire environ la moitié de celui d'un tube simple de diamètre 100 mm. De plus, la nécessité de maintenir la constance de l'espace annulaire, c'est-à-dire, une bonne concentricité entre le tube interne et le tube externe, oblige à installer entre le tube externe et le tube interne des éléments appelés centreurs, qui sont constitués par exemple de pattes solidaires de l'un des tubes ou encore de tirants reliant les parois des tubes interne et externe. Généralement ces centreurs sont au nombre de 2 à 6, et de façon préférée au nombre de 3, sur une section donnée. Sur un tube baïonnette d'une longueur de 15 m, il peut être nécessaire de répartir ces centreurs sur 4 ou 5 niveaux régulièrement échelonnées le long du tube.

Dans la suite du texte, on parlera de secteur angulaire pour désigner la portion d'espace comprise entre deux centreurs consécutifs.

Les contraintes du chargement de particules de catalyseur dans un tube baïonnette muni de centreurs peuvent être résumées de la manière suivante:
- éviter la cassure des particules sous l'effet d'une hauteur de chute trop importante (typiquement supérieure à 5 m),
- éviter le coincement des particules au sein du tube de chargement,
- éviter une sortie en groupe de particules du tube de chargement, car l'expérience montre que lorsqu'un groupe de particules quitte le tube de chargement simultanément, il y a un risque important de formation de voûte.

Il résulte de cet ensemble de contraintes que la méthode selon la présente invention est une méthode qui fait appel à un chargement "grain par grain" et qui nécessite un choix rigoureux du diamètre du tube de chargement par rapport aux dimensions des particules de catalyseur. Si l'on appelle dmax la plus grande dimension d'une particule ou grain de catalyseur, et dmin la plus petite dimension de ladite particule, il a été montré que pour éviter les phénomènes de coincement, de sortie en groupe des particules, tout en assurant un écoulement grain par grain au sein du tube de chargement, il convient de respecter les conditions suivantes entre le diamètre du tube de chargement Dt et les dimensions dmax et dmin de la particule:
Dt doit être à la fois supérieur à 1,1 fois dmax et inférieur à 2 fois dmin.

### DESCRIPTION SOMMAIRE DES FIGURES

La figure 1 est une vue schématique du dispositif selon la présente invention dans lequel se trouvent rassemblées les principales caractéristiques de celui ci.
La figure 2 est une vue de dessus permettant de visualiser les secteurs angulaires et la position dans chaque secteur du tube de chargement.
La figure 3 est une vue schématique du dispositif selon la présente invention équipé en option d'un système d'extraction des fines particules et de freinage des particules de catalyseur par contre courant gazeux.

### DESCRIPTION SOMMAIRE DE L'INVENTION

La présente invention peut se définir comme un dispositif de chargement de particules de catalyseur dans l'espace annulaire d'un tube de type baïonnette. Un tube baïonnette se définit usuellement comme constitué d'un tube externe de diamètre Dext et d'un tube interne, concentrique au tube externe, de diamètre Dint. L'espace annulaire compris entre le tube externe et le tube interne constitue la zone annulaire catalytique à remplir de particules de catalyseur.

Ces tubes baïonnettes sont typiquement utilisés dans des réacteurs de vaporeformage de diverses charges hydrocarbures, notamment le gaz naturel, et se présentent alors sous forme d'une pluralité de 200 à 300 tubes enfermés dans une virole qui peut atteindre 15 mètres de diamètre.

Bien entendu, le dispositif décrit dans la présente invention peut être dupliqué au nombre de fois voulu pour assurer le chargement simultané de plusieurs tubes baïonnette.

La présente invention n'est pas liée à une forme particulière des particules de catalyseur.

En particulier, les particules de catalyseur peuvent avoir la forme de petits cylindres (7) éventuellement percés de petits canaux pour augmenter la surface spécifique desdites particules.

Il est seulement nécessaire de distinguer dans la particule de catalyseur la plus grande dimension notée dmax, et la plus petite dimension notée dmin. En effet, l'invention repose sur un dimensionnement rigoureux des tubes de chargement par lesquels les particules de catalyseur sont introduites dans chacun des secteurs de la zone annulaire.

Le diamètre des tubes de chargement doit être juste supérieur à la plus grande dimension (dmax) des particules de catalyseur, tout en restant inférieur à 2 fois la plus petite dimension (dmin) desdites particules. On entend par juste supérieur une valeur de 1,1 fois la dimension dmax.

Pour assurer la bonne concentricité des tubes interne et externe, des éléments appelés "centreurs" relient la paroi interne du tube externe et la paroi externe du tube interne.

Ces centreurs, sont présents dans un nombre compris entre 2 et 6 par section, et de façon préférée sont au nombre de 3 par section du tube réactionnel.

Ces centreurs sont répartis le long du tube baïonnette et contribuent également à sa rigidité, qui est un aspect important de la bonne opérabilité du réacteur.

Le dispositif de chargement selon la présente invention permet donc le chargement de particules de catalyseur dans la zone annulaire d'un tube baïonnette dont la section annulaire est divisée en N secteurs angulaires par des éléments appelés centreurs, ledit dispositif comprenant :
- une trémie de chargement des particules de catalyseur, située à l'extérieur de la pluralité de tubes,
- un ensemble de N couloirs vibrants reliés à la partie inférieure de la trémie et à N tubes de chargement, chaque tube de chargement alimentant un secteur angulaire et ayant un diamètre Dt supérieur à 1,1 fois la plus grande dimension des particules de catalyseur dmax, et inférieur à 2 fois la plus petite dimension des particules de catalyseur dmin, la longueur (Lt) d'un tube de chargement étant initialement sensiblement égale à la longueur du tube baïonnette (Lb),
- un ensemble de N éléments de liaison souples reliant chaque couloir vibrant à un tube de chargement en permettant un changement de direction approprié.

On entend par "longueur (Lt) du tube de chargement sensiblement égale à celle du tube baïonnette (Lb)", le fait que Lt est inférieure à Lb de moins de 1 mètre, et préférentiellement de moins de 0,5 mètre.

De manière générale, le nombre de secteurs angulaires est compris entre 3 et 6, et préférentiellement il est de 3.

Dans une variante de la présente invention, le dispositif peut être complété par un système d'extraction des fines particules.

Dans une autre variante de la présente invention, le dispositif peut être complété par un système de freinage des particules destiné à limiter leur vitesse au cours de leur descente dans le tube de chargement, généralement disposé verticalement ou sensiblement verticalement. Ce système de freinage des particules de catalyseur peut consister en des éléments cylindriques disposés perpendiculairement à l'axe dudit tube de chargement et fixés à la paroi dudit tube avec un espacement vertical de 1 mètre à plus ou moins 10 cm près.

On entend par "sensiblement verticalement" la possibilité que le tube baïonnette (et donc le tube de chargement associé) fasse un angle de plus ou moins 30° par rapport à la verticale.

Le dispositif de chargement selon l'invention permet de réaliser des chargements homogènes en densité sur toute la longueur des tubes baïonnette ainsi qu'entre les différents tubes baïonnettes constituant la zone catalytique du réacteur.

L'invention porte également sur la méthode de mise en oeuvre du dispositif qui est décrite dans le paragraphe suivant.

### DESCRIPTION DETAILLEE DE L'INVENTION

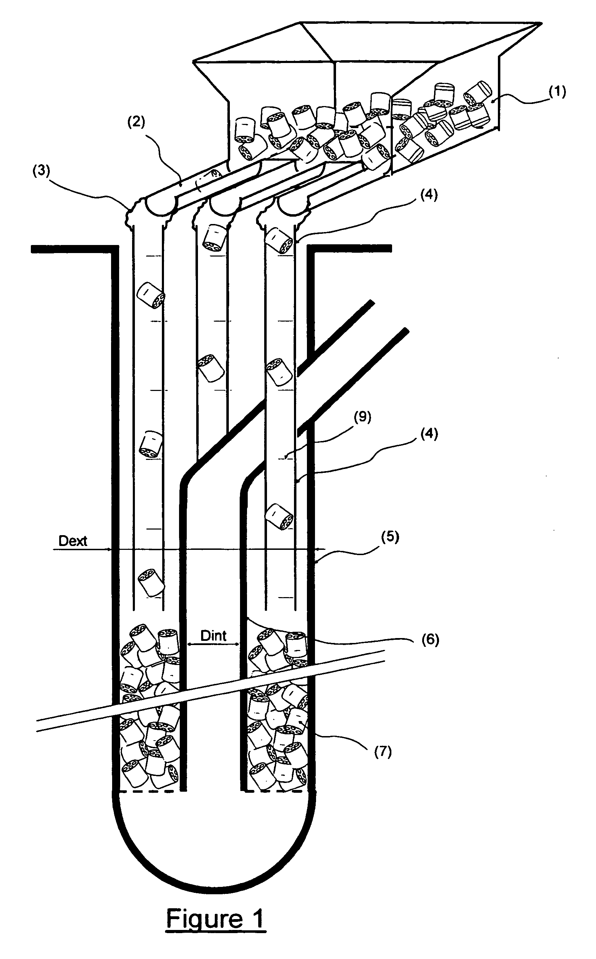

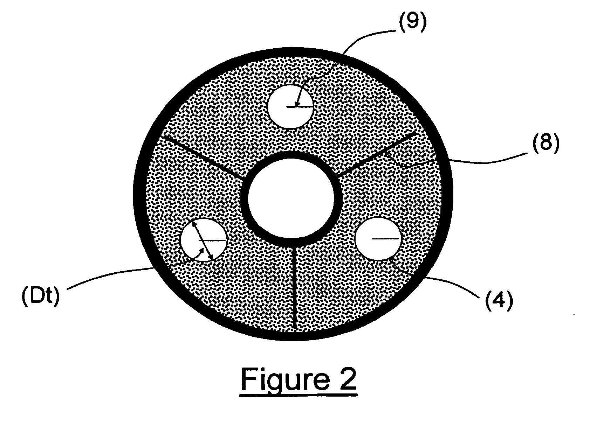

Le dispositif de chargement de particules de catalyseur dans la zone annulaire d'un tube baïonnette comporte les éléments suivants qui sont décrits dans l'ordre de progression des particules de catalyseur. Les numéros renvoient aux figures 1 et 2.
- une trémie de chargement (1) qui peut être de tout type connu de l'homme du métier,
- un ensemble de N couloirs vibrants (2) dont une extrémité pénètre dans la zone inférieure de la trémie de chargement (1), et l'autre extrémité est mis en communication par des éléments de liaison souple (3) avec chaque tube de chargement (4),
- un ensemble de N tubes de chargement (4) pénétrant à l'intérieur de chaque secteur angulaire, le diamètre Dt d'un tube de chargement respectant les deux conditions a) supérieur à 1,1 fois la plus grande dimension dmax des particules à charger et b) inférieur à 2 fois la plus petite dimension dmin des particules à charger,

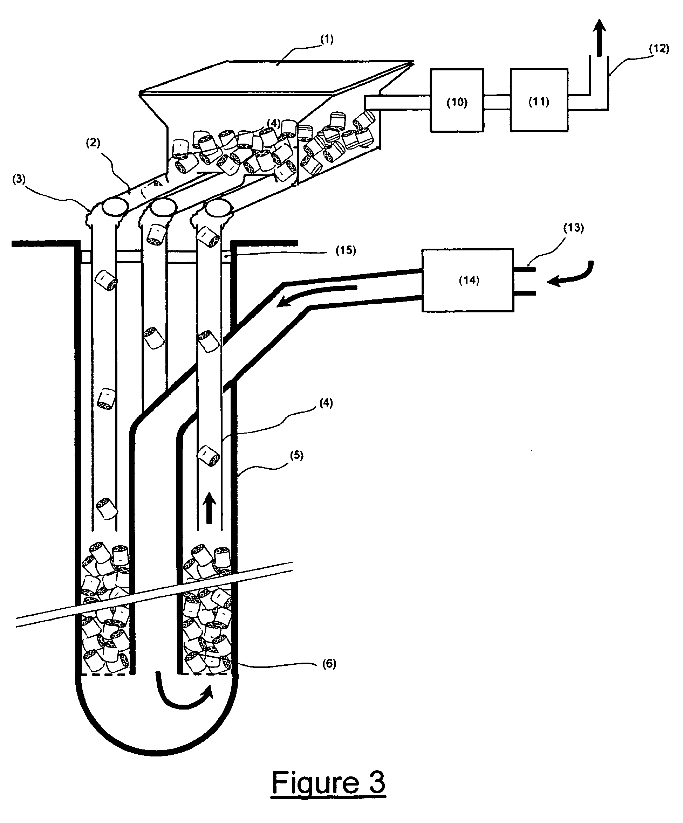

Cet ensemble peut être complété par un système d'extraction des fines particules de catalyseur (10,12 sur la figure 3).

Pour ralentir la chute des particules de catalyseur à l'intérieur du tube de chargement, généralement disposé verticalement, il peut être nécessaire de prévoir un système de freinage des dites particules. A titre d'exemple on peut utiliser comme système de freinage des éléments cylindriques en matériau souple (des sortes de "cils") disposés perpendiculairement à l'axe dudit tube de chargement, noté (9) sur la figure 1, et fixés à la paroi dudit tube avec un espacement vertical d'environ 1 mètre, espacement variable en fonction de la fragilité du catalyseur à charger.

Un autre exemple de système de freinage est l'utilisation d'un courant d'air ascendant créé par aspiration (11), (12) ou insufflation d'air (noté (13), (14) sur la figure 3).

Quelque soit le moyen de circulation d'air utilisé, un dispositif de filtration (10) permet de retenir les fines particules de catalyseur pouvant être entraînées. On entend par fines particules de catalyseur des fragments de particules issues de l'attrition, et qui ont une dimension inférieure à 1mm.

Tout autre système permettant de ralentir la chute des particules peut bien entendu être envisagé et reste dans le cadre de la présente invention.

Après chargement des tubes baïonnette, la qualité du chargement est vérifiée par mesure de la perte de charge (ΔP) du lit catalytique remplissant la zone annulaire, c'est-à-dire entre l'entrée du tube baïonnette côté catalyseur (extrémité supérieure de l'espace annulaire) et la sortie du tube baïonnette (extrémité supérieure du tube intérieur).

La mesure de ΔP est réalisée en faisant passer un écoulement d'air à travers le tube chargé de catalyseur. Un bon chargement correspond à une déviation de ΔP entre 2 tubes inférieure à ±5% par rapport à la moyenne, ce qui assure une distribution homogène des particules de catalyseur entre les différents tubes.

La méthode de chargement d'un tube baïonnette consiste en la suite d'étapes suivantes:
- Chargement du catalyseur dans la trémie de chargement,
- Passage des grains dans les N couloirs vibrants,
- Chargement "grain par grain" dans les N tubes de chargement,
- Raccourcissement des tubes de chargement lorsque la hauteur de la couche de particules chargées se rapproche de l'extrémité inférieure du tube de chargement d'une distance inférieur à 1 mètre, et préférentiellement inférieure à 0,5 mètre.
- Vérification de la qualité du chargement par mesure de perte de charge en faisant circuler de l'air dans le lit catalytique remplissant la zone annulaire, la mesure de ΔP étant prise entre l'extrémité supérieure de l'espace annulaire rempli de catalyseur et l'extrémité supérieure du tube intérieur, sensiblement au même niveau.

### EXEMPLE SELON L'INVENTION

On considère un réacteur de vaporeformage destiné à la production de 100 000 Nm³/heure de gaz de synthèse, composé d'une multiplicité de tubes baïonnette, chaque tube baïonnette étant formé d'un tube interne et d'un tube externe concentriques. Il y a 3 centreurs par section du tube, les différents centreurs étant alignés le long du tube baïonnette, et délimitant ainsi 3 secteurs angulaires.
- Diamètre interne du tube externe (5) : Dext = 150 mm
- Diamètre externe du tube interne (6) : Dint = 50 mm
- Dimension de l'espace annulaire : e = 50 mm
- Longueur du tube baionnette : Lb = 12 m
- Diamètre du réacteur: 10 mètres
- Nombre de secteurs angulaires : N = 3
- Nombre de tubes baïonnette: 280

Les dimensions des particules de catalyseur de forme cylindrique sont :
- dmin = 9 mm
- dmax = 16 mm

Le dispositif de chargement est constitué de :
- Trémie de chargement
- Nombre de couloirs vibrants : N = 3
- Nombre de tubes de chargement : N = 3
- Diamètre des tubes de chargement : Dt = 18 mm
- Longueur initiale du tube de chargement Lt = 11m
- Dispositif de freinage par cylindres en silicone, disposés tous les 50 cm

Chaque tube de chargement est composé d'un assemblage de 11 tronçons d'1 mètre.

Lorsque la hauteur du lit catalytique dans la zone annulaire augmente, les tronçons sont enlevés progressivement de façon à raccourcir la longueur totale du tube de chargement et maintenir ainsi une hauteur de chute des particules inférieure à 1 mètre.

La hauteur de chute s'évalue comme la distance séparant l'extrémité supérieure de la couche de particules déjà chargées dans la zone annulaire et l'extrémité de sortie du tube de chargement.

Quatre chargements notés 1, 2, 3 et 4 ont été réalisés avec le dispositif objet de l'invention. Les résultats en termes de densité du lit de catalyseur (Kg/m³) et de perte de charge (ΔP en mbar, soit 10⁻³ bar = 10² Pascals) sont les suivants :

| Chargement | 1 | 2 | 3 | 4 |
|---|---|---|---|---|
| Masse des grains chargés (kg) | 189 | 187 | 187 | 183 |
| Hauteur du chargement (mm) | 11850 | 11850 | 11850 | 11850 |
| Volume de chargement (litre) | 186 | 186 | 186 | 186 |
| Densité du lit (kg/m³) | 1017 | 1003 | 1003 | 981 |
| Débit d'air (m³/h) | 70 | 70 | 70 | 70 |
| ΔP (mbar) | 183,2 | 177,7 | 180,3 | 171,2 |
| Déviation du ΔP à la moyenne / ΔP moyen | + 2,86 % | - 0,21 % | + 1,22 % | - 3,87 % |

Le temps de chargement pour un tube est d'environ une demi heure.

Le temps total de chargement pour l'ensemble des 280 tubes est de 35 heures en réalisant un groupage des tubes baïonnettes par groupe de 70. Quatre dispositifs de chargement sont 5 utilisés en parallèle.

## Revendications

1. Dispositif permettant le chargement de particules de catalyseur dans la zone annulaire d'un tube baïonnette de diamètre externe Dext et de diamètre interne Dint dont la section annulaire est divisée en N secteurs angulaires par des éléments appelés centreurs comprenant:
- une trémie de chargement des particules de catalyseur,
- un ensemble de N couloirs vibrants reliés à la partie inférieure de la trémie et à N tubes de chargement, chaque tube de chargement alimentant un secteur angulaire et ayant un diamètre Dt supérieur à 1,1 fois la plus grande dimension des particules de catalyseur dmax, et inférieur à 2 fois la plus petite dimension des particules de catalyseur dmin, la longueur Lt d'un tube de chargement étant initialement sensiblement égale à la longueur du tube baïonnette.
- un ensemble de N éléments de liaison souples reliant chaque couloir vibrant à un tube de chargement en permettant un changement de direction approprié.

2. Dispositif de chargement de particules de catalyseur dans la zone annulaire d'un tube baïonnette selon la revendication 1, dans lequel le nombre N de secteurs angulaires et le nombre N de tubes de chargement est de 3.

3. Dispositif de chargement de particules de catalyseur dans la zone annulaire d'un tube baïonnette selon la revendication 1, dans lequel les tubes de chargement sont munis de systèmes de freinage des particules consistant en des éléments cylindriques disposés perpendiculairement à l'axe dudit tube de chargement et fixés à la paroi dudit tube avec un espacement vertical de 1 mètre à plus ou moins 10 cm près.

4. Dispositif de chargement de particules de catalyseur dans la zone annulaire d'un tube baïonnette selon la revendication 1, dans lequel le dispositif est complété par un système d'extraction de fines particules (10), (12).

5. Méthode de chargement de particules de catalyseur dans la zone annulaire d'un tube baïonnette faisant appel au dispositif selon la revendication 1, comportant la suite d'étapes suivantes:
- Chargement du catalyseur dans la trémie de chargement,
- Passage des grains dans les N couloirs vibrants,
- Chargement grain par grain dans les N tubes de chargement,
- Raccourcissement des tubes de chargement lorsque la hauteur de la couche de particules chargées se rapproche de l'extrémité inférieure du tube de chargement d'une distance inférieur à 1 mètre et préférentiellement inférieure à 0,5 mètre.
- Vérification de la qualité du chargement par mesure de perte de charge en faisant circuler de l'air dans le lit catalytique remplissant la zone annulaire, la mesure de ΔP étant prise entre l'extrémité supérieure de l'espace annulaire rempli de catalyseur et l'extrémité supérieure du tube intérieur, sensiblement au même niveau.

## Claims

1. A device for loading particles of catalyst into the annular zone of a bayonet tube with an external diameter Dext and an internal diameter Dint the annular section of which is divided into N angular sectors by elements termed centralizers, comprising:
• a hopper for loading catalyst particles;
• a set of N vibrating chutes connected to the lower portion of the hopper and to N loading tubes, each loading tube supplying one angular sector and having a diameter Dt of more than 1.1 times the largest dimension of the catalyst particles, dmax, and less than 2 times the smallest dimension of the catalyst particles, dmin, the length (Lt) of a loading tube initially being substantially equal to the length of a bayonet tube;
• a set of N flexible connection elements connecting each vibrating chute to a loading tube, thereby allowing an appropriate change of direction.

2. A device for loading catalyst particles into the annular zone of a bayonet tube according to claim 1, in which the number N of angular sectors and the number N of loading tubes is 3.

3. A device for loading catalyst particles into the annular zone of a bayonet tube according to claim 1, in which the loading tubes are provided with systems for braking particles consisting of cylindrical elements disposed perpendicular to the axis of said loading tube and fixed to the wall of said tube with a vertical spacing of I metre plus or minus approximately 10 cm.

4. A device for loading catalyst particles into the annular zone of a bayonet tube according to claim 1, in which the device is completed by a system for the extraction of fine particles (10), (12).

5. A method for loading catalyst particles into the annular zone of a bayonet tube using the device according to claim 1, comprising the following series of steps:
• loading a catalyst into the loading hopper;
• passing the grains into N vibrating chutes;
• grain-by-grain loading into the N loading tubes;
• shortening the loading tubes when the height of the layer of loaded particles approaches the lower end of the loading tube by a distance of less than 1 metre, and preferably less than 0.5 metre;
• verifying the quality of loading by measuring the pressure drop, causing air to circulate in the catalytic bed filling the annular zone, the measurement of ΔP being taken between the upper end of the annular space filled with catalyst and the upper end of the inner tube, substantially at the same level.

## Patentansprüche

1. Vorrichtung zum Einfüllen von Katalysatorpartikeln in den ringförmigen Bereich eines Mittelkernrohrs mit einem Außendurchmesser Dext und einem Innendurchmesser Dint, dessen ringförmiger Querschnitt durch Elemente, welche als Zentriervorrichtungen bezeichnet werden, in N Winkelsektoren unterteilt ist, umfassend:
- einen Trichter zum Einfüllen der Katalysatorpartikel,
- eine Gesamtheit von N Vibrationsrutschen, die mit dem unteren Abschnitt des Trichters und mit N Einfüllrohren verbunden sind, wobei jedes Einfüllrohr einen Winkelsektor speist und einen Durchmesser Dt hat, welcher größer als das 1,1-fache der größten Abmessung der Katalysatorpartikel dmax und kleiner als das 2-fache der kleinsten Abmessung der Katalysatorpartikel dmin ist, wobei die Länge Lt eines Einfüllrohrs ursprünglich im Wesentlichen gleich der Länge des Mittelkernrohrs ist,
- eine Gesamtheit von N biegsamen Verbindungselementen, die jede Vibrationsrutsche mit einem Einfüllrohr verbinden, wobei sie eine geeignete Richtungsänderung gestatten.

2. Vorrichtung zum Einfüllen von Katalysatorpartikeln in den ringförmigen Bereich eines Mittelkernrohrs nach Anspruch 1, wobei die Anzahl N an Winkelsektoren und die Anzahl N an Einfüllrohren 3 beträgt.

3. Vorrichtung zum Einfüllen von Katalysatorpartikeln in den ringförmigen Bereich eines Mittelkernrohrs nach Anspruch 1, wobei bei die Einfüllrohre mit Systemen zum Abbremsen der Partikel versehen sind, welche in zylindrischen Elementen bestehen, die rechtwinklig zum Einfüllrohr angeordnet und mit einem vertikalen Abstand von 1 Meter plus/minus 10 cm an der Wand des Rohres befestigt sind.

4. Vorrichtung zum Einfüllen von Katalysatorpartikeln in den ringförmigen Bereich eines Mittelkernrohrs nach Anspruch 1, wobei die Vorrichtung durch ein System zum Entfernen von Feinpartikeln (10), (12) ergänzt wird.

5. Verfahren zum Einfüllen von Katalysatorpartikeln in den ringförmigen Bereich eines Mittelkernrohrs, bei welchem eine Vorrichtung nach Anspruch 1 zum Einsatz kommt, wobei es die Abfolge der folgenden Schritte aufweist:
- Einfüllen des Katalysators in den Einfülltrichter,
- Durchgang der Körner in die N Vibrationsrutschen,
- Einfüllen Korn für Korn in die N Einfüllrohre,
- Verkürzung der Einfüllrohre wenn sich die Höhe der Schicht aus eingefüllten Partikeln dem unteren Ende des Einfüllrohrs bis auf einen Abstand von weniger als 1 Meter und vorzugsweise von weniger als 0,5 Meter annähert.
- Überprüfung der Qualität des Einfüllvorgangs durch Messen des Druckabfalls, indem Luft durch das Katalysatorbett geleitet wird, welches den ringförmigen Bereich ausfüllt, wobei die Messung von ΔP zwischen dem oberen Ende des katalysatorbefüllten ringförmigen Raums und dem oben Ende des inneren Rohrs, im wesentlichen auf derselben Höhe, erfolgt.
